# FASCICULE DE BREVET EUROPEEN

(11) **EP 2 779 874 B1**
(45) Date de publication et mention de la délivrance du brevet: **22.06.2016**
(21) Numéro de dépôt: 12794426.2
(22) Date de dépôt: 31.10.2012
(51) Int. Cl.: A47J 19/02

(54) **APPAREIL D'EXTRACTION DE JUS ALIMENTAIRE**
VORRICHTUNG ZUR EXTRAKTION VON GETRÄNKESÄFTEN
DEVICE FOR EXTRACTING BEVERAGE JUICES

(30) Priorité: 14.11.2011 FR 1160341
(43) Date de publication de la demande: 24.09.2014
(73) Titulaire: SEB S.A., 69130 Ecully (FR)
(72) Inventeur: RAUDE, Christian, F-64160 Buros (FR); SENTAGNES, Clémence, F-65000 Tarbes (FR)
(74) Mandataire: Cémeli, Eric Philippe Laurent
(86) Numéro de dépôt international: PCT/FR2012/052537
(87) Numéro de publication internationale: WO 2013/072598

(56) Documents cités:
- WO-A1-2010/063956
- US-A- 5 479 851
- US-A1- 2004 231 529

## Description

La présente invention concerne de manière générale un appareil d'extraction de jus alimentaire, et en particulier la goulotte d'alimentation d'un tel appareil.

Il est connu dans l'art antérieur des appareils d'extraction de jus munis d'une goulotte d'alimentation. En particulier, le document EP 684 000 divulgue un extracteur de jus par centrifugation. Un couvercle qui ferme l'enceinte de travail comporte une telle goulotte qui présente une lame tranchante dans sa partie inférieure. En contrepartie, ce système présente notamment l'inconvénient de ne pas pouvoir s'adapter sur tous les appareils d'extraction, notamment en raison des normes de sécurité qui imposent des goulottes de petite section dans le cas d'un appareil avec un outil coupant ou une vis de pressage. Enfin, le disque tournant est compliqué car il est équipé d'un cône central pour écarter les aliments de la zone centrale du disque où les vitesses tangentielles sont faibles et l'abrasion inefficace.

Le document CH 624 044 décrit un appareil de coupe avec une goulotte d'alimentation séparée en trois canaux sur une partie de sa hauteur par des nervures supportant un axe de centrage pour le disque de coupe. Cette goulotte n'est pas adaptée pour être alimentée avec des objets de grandes dimensions, car les nervures ne coupent pas, et l'axe de centrage débouche vers le haut, constituant ainsi un obstacle par définition non tranchant. De plus, la sécurité d'utilisation n'est pas suffisante car ce document stipule que les aliments ne sont pas compressés pour être coupés (afin de garder leur jus), ce qui revient à interdire l'utilisation d'un poussoir qui empêche un utilisateur d'aller au contact du disque coupant. En conséquence, la goulotte décrite ne répond pas aux impératifs de sécurité que la demanderesse se doit de respecter.

Le document WO2005094649 divulgue un extracteur de jus par centrifugation comportant deux goulottes de tailles distinctes. Cette mise en oeuvre n'est pas pratique car l'utilisateur est obligé de pré-couper les aliments à préparer avant de les introduire dans la goulotte. D'autre part, les deux goulottes distinctes, reliées seulement sur une partie de leur circonférence, ne sont pas aisées à fabriquer avec des outillages de moulage par injection complexes.

Le document FR 2 932 665 décrit un appareil de pressage à vis. Le couvercle est équipé d'une goulotte comportant éventuellement une lame de faible hauteur pour découper des aliments introduits dans la goulotte. Par contre, ce document ne permet pas de satisfaire aux exigences de sécurité et l'utilisateur pourrait se faire couper ou happer par l'organe tournant de l'appareil. De plus, la lame décrite ne permet pas de guider correctement les aliments, de trop gros morceaux sont arrachés par la vis de pressage et l'efficacité de pressage est assez faible.

Un but de la présente invention est de répondre aux inconvénients des documents de l'art antérieur mentionnés ci-dessus et en particulier, tout d'abord, de proposer un appareil d'extraction de jus présentant une goulotte dont l'utilisation est sécurisée, tout en restant ergonomique à utiliser, même avec des aliments de grande taille.

Pour cela un premier aspect de l'invention concerne un appareil d'extraction de jus alimentaire comportant une enceinte de travail avec une goulotte d'alimentation définissant une hauteur entre une entrée d'alimentation et une sortie d'alimentation vers l'enceinte de travail, la goulotte d'alimentation étant divisée en deux canaux par une paroi présentant une arête tranchante du côté de l'entrée d'alimentation, l'enceinte de travail contenant une vis de pressage avec au moins un filet principal, alimentée par la goulotte, du fait que la paroi divise la goulotte sur au moins les trois-quarts de sa hauteur et que l'appareil comporte des moyens de découpe rotatifs agencés entre la sortie d'alimentation et la vis de pressage. L'invention propose ainsi un appareil d'extraction de jus avec une vis de pressage qui comporte une goulotte appropriée aux exigences de sécurité, tout en offrant la possibilité de préparer des jus à partir d'aliments de grandes dimensions. En effet, la goulotte est séparée en deux canaux satisfaisant chacun les exigences de sécurité en terme de taille de passage, et l'arête tranchante agencée du côté de l'alimentation supprime la nécessité de pré-couper les aliments à préparer. L'ergonomie de l'appareil selon la présente invention est bonne, ainsi que la sécurité d'utilisation. Enfin, l'unique paroi selon l'invention apporte de la rigidité à la goulotte, sans être onéreuse à réaliser. Bien entendu, l'arête tranchante ne doit pas être coupante pour l'utilisateur et doit seulement trancher des aliments pas trop durs, tels que des pommes. Par ailleurs, l'efficacité de pressage est améliorée par les moyens de découpe rotatifs qui assurent que les aliments passant par la goulotte seront coupés avant d'être happés par la vis de pressage.

Une réalisation particulièrement intéressante consiste en ce que la paroi divise la goulotte sur au moins 90% de sa hauteur. Cette mise en oeuvre ne nécessite pas de matière superflue pour la goulotte dont la longueur totale est égale à celle des canaux, au juste nécessaire. Alternativement, on peut envisager que l'arête tranchante soit agencée au niveau de l'entrée d'alimentation et que la paroi divise la goulotte sur une longueur inférieure à la longueur de la goulotte. Cette configuration assure au minimum la sécurité d'utilisation car l'utilisateur ne peut engager sa main dans les canaux, et la longueur totale de la goulotte est définie au minimum, sans que la paroi ne fasse toute la longueur de la goulotte.

Avantageusement, les canaux sont agencés de part et d'autre d'un axe de rotation de la vis de pressage, et les moyens de découpe rotatifs sont entraînés en rotation par l'axe avec la vis de pressage et comportent au moins un couteau pour effectuer une coupe des aliments insérés dans la goulotte. L'efficacité de pressage est améliorée par la découpe des aliments préalablement au pressage, sans requérir de mécanisme spécifique, car les moyens de découpe rotatifs tournent avec la vis de pressage. La construction de l'appareil reste simple.

Avantageusement, la vis de pressage comporte au moins deux filets principaux, et les moyens de découpe rotatifs comportent au moins deux couteaux agencés de part et d'autre de l'axe de rotation pour effectuer une coupe des aliments insérés dans la goulotte. La présente invention propose un appareil de pressage avec au moins deux couteaux, ou un nombre pair de couteaux, ce qui crée une synergie entre la goulotte et les moyens de découpe rotatifs. En effet, les aliments de grande taille sont coupés en deux parties par l'arête tranchante à l'entrée de la goulotte et lors de la coupe ultérieure par les moyens de découpe rotatifs, les efforts sur les moyens de découpe rotatifs sont symétriques par rapport à l'axe de rotation et équilibrés du fait de leur coupe, ce qui minimise les couples de réaction sur le mécanisme d'entraînement en rotation des moyens de découpe rotatifs.

Avantageusement, les couteaux et les canaux sont agencés symétriquement par rapport à l'axe de rotation, de sorte que la coupe des aliments dans chaque canal est simultanée.

De manière avantageuse, la goulotte comporte des moyens déflecteurs agencés pour écarter des aliments introduits dans les canaux de l'axe de rotation et les diriger directement vers les moyens de découpe rotatifs. Les moyens déflecteurs selon l'invention provoquent une coupe efficace en dirigeant les aliments sur le ou les couteaux, ce qui évite aux aliments de s'accumuler sur des parties non tranchantes des moyens de découpe rotatifs.

Avantageusement, les moyens déflecteurs sont un évasement de la ou des paroi(s). Cette mise en oeuvre est économique à réaliser.

Une réalisation particulièrement intéressante consiste en ce que la vis de pressage comporte au moins une extrémité de filet principal en regard avec la sortie d'alimentation, et en ce que les moyens de découpe rotatifs comportent au moins un couteau agencé en extrémité de filet principal. Selon cette mise en oeuvre, la vis offre deux fonctions : coupe et pressage, ce qui limite le nombre de composants et le coût de l'appareil.

Une réalisation alternative particulièrement intéressante consiste en ce que les moyens de découpe rotatifs appartiennent à un disque de découpe agencé entre la sortie d'alimentation et la vis de pressage. La présente invention propose un appareil de pressage avec un disque de découpe intercalé entre la vis de pressage et la goulotte d'alimentation pour effectuer une découpe des aliments avant d'entrer dans la vis de pressage. Le pressage est amélioré.

Avantageusement, la vis de pressage est entraînée en rotation par le disque de découpe. L'efficacité de pressage est accrue : il est nécessaire d'installer le disque de découpe qui facilite ensuite le pressage car les aliments sont introduits dans la vis de pressage sous forme de morceaux. Ensuite, la sécurité est également améliorée car le disque est obligatoirement intercalé entre la goulotte et la vis de pressage, l'utilisateur ne peut pas se faire happer par cette dernière.

Avantageusement, l'enceinte de travail comporte des moyens de guidage des moyens de découpe rotatifs et/ou de la vis de pressage. Le guidage mécanique est amélioré, et les vibrations réduites.

Avantageusement, les moyens de guidage comprennent un moyeu noyé dans la ou les paroi(s). Cette mise en oeuvre est économique.

Avantageusement alors, les moyens de guidage sont agencés dans l'évasement de la ou des paroi(s). Le coût de fabrication est réduit et la conception est compacte.

Avantageusement, les moyens de découpe rotatifs comportent deux couteaux. Cette mise en oeuvre est économique et procure la synergie avec les deux canaux de la goulotte.

Avantageusement, l'arête tranchante est réalisée dans la même matière que la goulotte. La conception de la goulotte est économique et sa fabrication ne nécessite pas d'opérations complexes.

En alternative de ce premier mode de réalisation, l'arête tranchante est une pièce rapportée sur la goulotte d'alimentation. L'efficacité du tranchage est optimisée et le concepteur peut même donner des formes variées à l'arête, sans impacter les outils de fabrication de la goulotte.

Avantageusement, l'appareil comporte un poussoir agencé pour pousser les aliments tout le long de la goulotte. La sécurité d'utilisation est accrue.

D'autres caractéristiques et avantages de la présente invention apparaîtront plus clairement à la lecture de la description détaillée qui suit d'un mode de réalisation de l'invention et de variantes, donnés à titre d'exemple nullement limitatif et illustrés par les dessins annexés, dans lesquels :
- la figure 1 représente un couvercle avec une goulotte en coupe équipant un appareil d'extraction de jus selon l'invention ;
- la figure 2 représente un appareil selon l'invention en coupe ;
- la figure 3 représente une vue isométrique de la goulotte ;
- la figure 4 représente une vis de pressage ;
- la figure 5 représente un disque de découpe ;
- la figure 6 représente une vue en perspective de dessus d'une première variante de réalisation de la goulotte,
- la figure 7 représente une vue en perspective de dessous de la première variante de réalisation de la goulotte illustrée sur la figure 6,
- la figure 8 représente une vue en perspective de dessus d'une deuxième variante de réalisation de la goulotte,
- la figure 9 représente une vue en perspective de dessous de la deuxième variante de réalisation de la goulotte illustrée sur la figure 8,
- la figure 10 représente une variante de réalisation d'une vis de pressage avec un disque de découpe intégré.

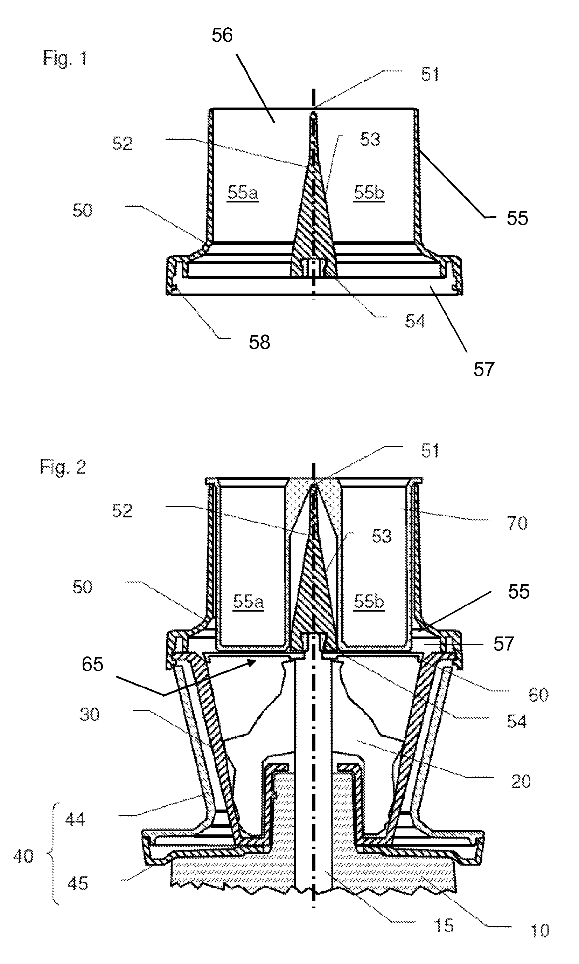

La figure 1 représente un couvercle 50 avec une goulotte 55 d'alimentation divisée en deux canaux 55a et 55b, sur toute sa hauteur (entre une entrée d'alimentation 56 et une sortie d'alimentation 57) par une paroi 52 qui se termine du côté de l'entrée d'alimentation 56 par une arête tranchante 51. Ainsi la paroi 52 s'étend jusqu'à l'entrée d'alimentation 56 et jusqu'à la sortie d'alimentation 57. La partie inférieure du couvercle 50 comporte un moyeu 54, une interface de fixation 58 et un évasement 53 de la paroi 52, dont le fonctionnement sera décrit à la figure 2.

La figure 2 représente un appareil d'extraction de jus alimentaire en coupe, équipé du couvercle 50 de la figure 1. L'appareil d'extraction de jus alimentaire comporte une enceinte de travail 40 avec la goulotte 55. Un boîtier 10 loge un moteur non représenté qui entraîne en rotation un axe 15. L'enceinte de travail 40 contient un filtre 30 et une vis de pressage 20 et repose sur le boîtier 10. La vis de pressage 20 est entraînée en rotation dans le filtre 30. L'enceinte de travail 40 comporte un récepteur de jus inférieur 45 surmonté d'un déflecteur de jus 44. Un disque de découpe 60 est intercalé entre la vis de pressage 20 et le couvercle 50. L'axe 15 entraîne le disque de découpe 60 et la vis de pressage 20, et coopère avec le moyeu 54 qui procure un guidage en bout d'axe afin de limiter les vibrations. Dans l'exemple de réalisation illustré sur les figures, la vis de pressage 20 est entraînée en rotation par l'axe 15 par l'intermédiaire du disque de découpe 60.

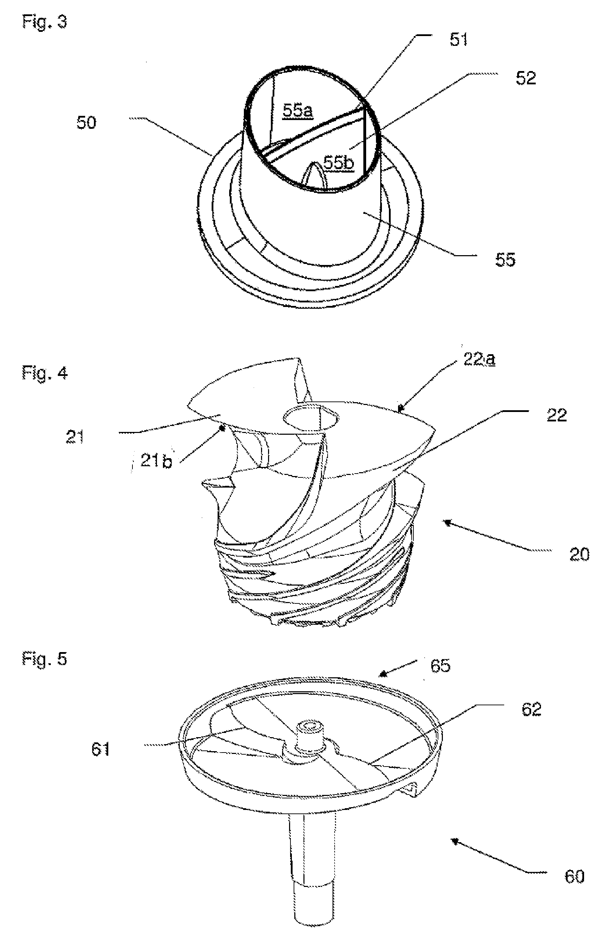

Les canaux 55a, 55b sont agencés de part et d'autre de l'axe 15 de rotation de la vis de pressage 20. Les aliments introduits dans les canaux 55a et 55b de la goulotte 55 et poussés par un poussoir 70 sont d'abord découpés par le disque de découpe 60 et ensuite pressés par la vis de pressage 20 contre le filtre 30. Le jus extrait est alors guidé vers le récepteur de jus inférieur 45 par le déflecteur de jus 44. Les deux canaux 55a et 55b de la goulotte 55 sécurisent l'utilisation de l'appareil tout en n'excluant pas la possibilité d'introduire directement des aliments de grande taille. En effet, la paroi 52 séparant la goulotte 55 sur toute sa longueur, la hauteur des canaux 55a et 55b est suffisante, en coopération avec leur section réduite par deux, pour empêcher tout contact de l'utilisateur avec le disque de découpe 60. Enfin, ce respect des normes de sécurité est sans impact négatif pour l'utilisateur car l'arête tranchante lui apporte la fonction de découpe intégrée des aliments dont la taille est supérieure à la section d'un canal 55a ou 55b, sans opération supplémentaire. Du point de vue des efforts, il est à noter que le disque de découpe 60 comporte un nombre pair de couteaux 61, 62 disposés symétriquement par rapport à l'axe 15 de rotation, de sorte qu'en coopération avec le nombre pair de canaux 55a et 55b, les efforts de coupe du disque de découpe 60 sont équilibrés puisque lorsqu'un couteau 61, 62 du disque de découpe 60 passe sous l'un des canaux 55a ou 55b, un couteau 61, 62 symétrique passe également sous l'autre canal. De manière avantageuse, le disque de découpe 60 comporte deux couteaux 61, 62, tel que représenté sur la figure 5. Enfin, l'évasement 53 agencé sur la partie aval de la paroi 52, à proximité du disque de découpe 60, a pour effet de diriger directement les aliments introduits dans les canaux 55a et 55b vers les couteaux 61, 62 du disque de découpe 60, à une distance du centre de rotation suffisamment importante où les vitesses tangentielles sont significatives et permettent de découper efficacement les aliments.

Ainsi l'appareil comporte des moyens de découpe rotatifs 65 agencés entre la sortie d'alimentation 57 et la vis de pressage 20. Les moyens de découpe rotatifs 65 sont agencés dans l'enceinte de travail 40. Les moyens de découpe rotatifs 65 appartiennent au disque de découpe 60. Ainsi les moyens de découpe rotatifs 65 sont entraînés en rotation par l'axe 15 avec la vis de pressage 20 et comportent au moins un couteau 61, 62 pour effectuer une coupe des aliments insérés dans la goulotte 55.

Plus particulièrement dans l'exemple de réalisation illustré sur les figures, la vis de pressage 20 comporte deux filets principaux 21, 22, et les moyens de découpe rotatifs 65 comportent deux couteaux 61, 62 agencés de part et d'autre de l'axe 15 de rotation pour effectuer une coupe des aliments insérés dans la goulotte 55. Les couteaux 61, 62 et les canaux 55a, 55b sont agencés symétriquement par rapport à l'axe 15 de rotation, de sorte que la coupe des aliments dans chaque canal 55a, 55b est simultanée.

La figure 3 représente la goulotte 55 et le couvercle 50 en perspective. La goulotte 55 est divisée sur toute sa hauteur par la paroi 52 qui comporte l'arête tranchante 51 du côté de l'entrée d'alimentation 56. La goulotte 55 est de forme elliptique et sa séparation selon sa petite largeur permet d'optimiser la taille des canaux 55a et 55b ainsi formés, tout en respectant les normes de sécurité.

La figure 4 illustre la vis de pressage 20, comportant deux filets principaux 21, 22 qui happent les aliments poussés dans l'enceinte de travail pour les presser.

La figure 5 illustre le disque de découpe 60, comportant deux couteaux 61, 62 agencés de part et d'autre de l'axe de rotation du disque de découpe 60, qui coupent les aliments poussés dans l'enceinte de travail.

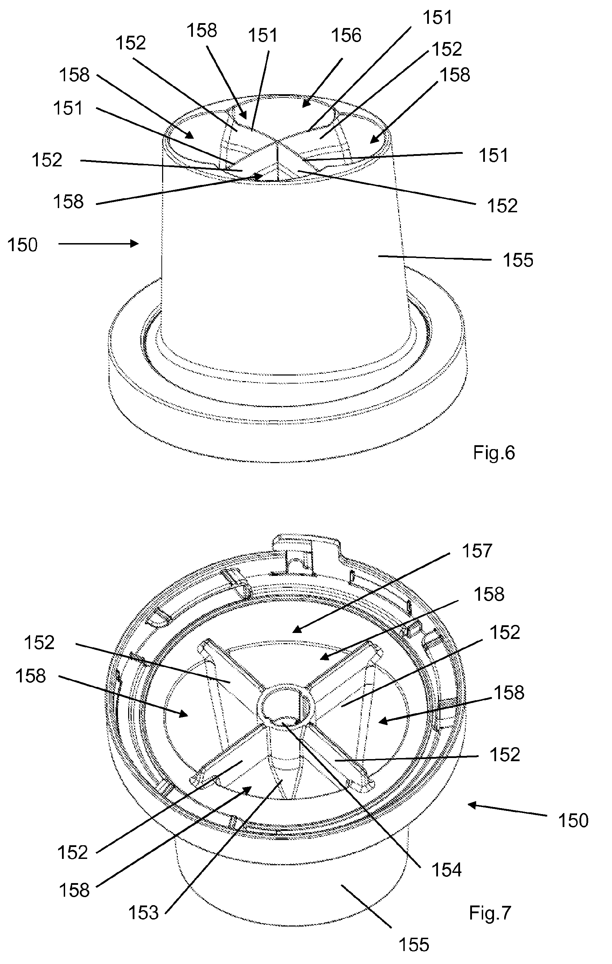

Les figures 6 et 7 illustrent une variante de réalisation du couvercle 50 de l'exemple de réalisation des figures 1 à 5, dans laquelle le couvercle 150 comporte une goulotte 155 présentant quatre canaux 158. Deux canaux 158 adjacents sont séparés par une paroi 152 présentant une arête tranchante 151 du côté de l'entrée d'alimentation 156. La goulotte 155 comporte quatre parois 152 agencées en croix. De préférence les parois 152 sont régulièrement espacées. Les canaux 158 sont ainsi identiques. Chaque paroi 152 divise la goulotte 155 sur environ 90% de sa hauteur entre l'entrée d'alimentation 156 et la sortie d'alimentation 157. Les canaux 158 sont agencés de part et d'autre de l'axe 15 de rotation de la vis de pressage 20, correspondant à la jonction entre les parois 152. Chaque arête tranchante 151 est réalisée dans la même matière que la goulotte 155. A titre de variante, au moins une arête tranchante 151 peut être une pièce rapportée sur la goulotte 155.

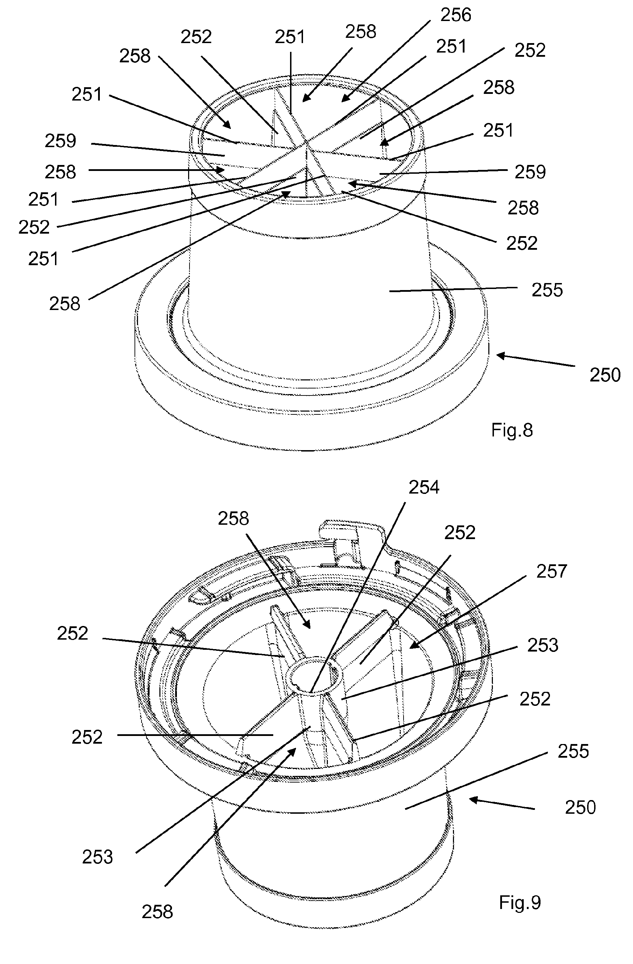

Les figures 8 et 9 illustrent une autre variante de réalisation du couvercle 50 ou du couvercle 150, dans laquelle le couvercle 250 comporte une goulotte 255 divisée en plusieurs canaux 258 par des parois 252 et par d'autres parois 259 de hauteur plus réduite. Les parois 252 et les autres parois 259 présentent une arête tranchante 251 du côté de l'entrée d'alimentation 256. Chaque arête tranchante 251 est une pièce rapportée sur la goulotte 255. Si désiré deux arêtes tranchantes 251 opposées peuvent être réalisées dans une même pièce. Les autres parois 259 sont avantageusement formées par la pièce réalisant deux arêtes tranchantes 251 opposées. A titre de variante, au moins une arête tranchante 251 peut être réalisée dans la même matière que la goulotte 255. Tel que mieux visible sur la figure 9, la goulotte 255 comporte quatre parois 252 agencées en croix non perpendiculaire, deux parois 252 adjacentes proches définissant un canal 258, deux parois 252 adjacentes éloignées étant séparées par une autre paroi 259 de hauteur plus réduite. De préférence les parois 252 et les autres parois 259 sont régulièrement espacées. Les canaux 258 sont ainsi identiques. La goulotte 255 comporte deux autres parois 259 opposées. Chaque paroi 252 divise la goulotte 255 sur environ 90% de sa hauteur entre l'entrée d'alimentation 256 et la sortie d'alimentation 257. Les canaux 258 sont délimités soit par deux parois 252 adjacentes, soit par une paroi 252 et une autre paroi 259 adjacentes. Ainsi la goulotte 255 est divisée en deux canaux 258 par une paroi 252 divisant la goulotte 255 sur au moins les trois-quarts de sa hauteur. Les canaux 258 sont agencés de part et d'autre de l'axe 15 de rotation de la vis de pressage 20, correspondant à la jonction entre les parois 252.

L'enceinte de travail 40 utilisant le couvercle 150; 250 comporte avantageusement des moyens de guidage des moyens de découpe rotatifs 65 et/ou de la vis de pressage 20. Plus particulièrement, tel que visible sur la figure 7 ou sur la figure 9, les moyens de guidage comprennent un moyeu 154 ; 254 noyé dans les parois 152 ; 252. Le moyeu 154 ; 254 est agencé à la jonction des parois 152 ; 252. La goulotte 155 ; 255 comporte également des moyens déflecteurs agencés pour écarter des aliments introduits dans les canaux 158 ; 258 de l'axe 15 de rotation de la vis de pressage 20, et les diriger directement vers les moyens de découpe rotatifs 65. Plus particulièrement, tel que visible sur la figure 7 ou la figure 9, les moyens déflecteurs sont un évasement 153; 253 des parois 152; 252. Chaque évasement 153 ; 253 relie deux parois 152 ; 252 adjacentes.

L'enceinte de travail 40 peut ainsi contenir la vis de pressage 20 avec au moins un filet principal 21, 22, alimentée par la goulotte 55 ; 155 ; 255. Si désiré, l'appareil peut comporter un poussoir agencé pour pousser les aliments tout le long de la goulotte 55 ; 155 ; 255.

A titre de variante, la paroi 52; 152; 252 ne s'étend pas nécessairement sur toute la hauteur de la goulotte 55, entre l'entrée d'alimentation 56 ; 156 ; 256 et la sortie d'alimentation 57 ; 157 ; 257. La paroi 52 ; 152 ; 252 peut diviser la goulotte 55 ; 155 ; 255 sur au moins les trois-quarts de sa hauteur. De préférence, la paroi 52 ; 152 ; 252 divise la goulotte 55 ; 155 ; 255 sur au moins 90% de sa hauteur. De préférence, la paroi 52 ; 152 ; 252 s'étend jusqu'à la sortie d'alimentation 57 ; 157 ; 257 et/ou présente un jeu réduit avec les moyens de découpe rotatifs 65, inférieur à la hauteur de coupe des couteaux 61, 62.

A titre de variante, la vis de pressage 20 peut comporter au moins un filet principal 21, 22. La vis de pressage 20 peut également comporter un ou plusieurs filets secondaires.

A titre de variante, le disque de découpe 60 peut comporter au moins un couteau 61, 62, le nombre de couteaux 61, 62 étant de préférence au moins égal au nombre de filets principaux.

A titre de variante, les moyens de découpe rotatifs 65 ne sont pas nécessairement formés par le disque de découpe 60 agencé entre la sortie d'alimentation 57 ; 157 ; 257 et la vis de pressage 20, mais peuvent notamment être formés par au moins un couteau agencé ou formé en extrémité 21 b, 22a de filet principal 21, 22 de la vis de pressage 20, tel que visible sur la figure 4. La vis de pressage 20 comporte alors au moins une extrémité 21 b, 22a de filet principal 21, 22 en regard avec la sortie d'alimentation 57 ; 157 ; 257, de sorte que le ou les couteaux balayent la sortie d'alimentation 57 ; 157 ; 257 au niveau de chaque canal 55a, 55b ; 158 ; 258 pour trancher les aliments introduits dans la goulotte 55 ; 155 ; 255.

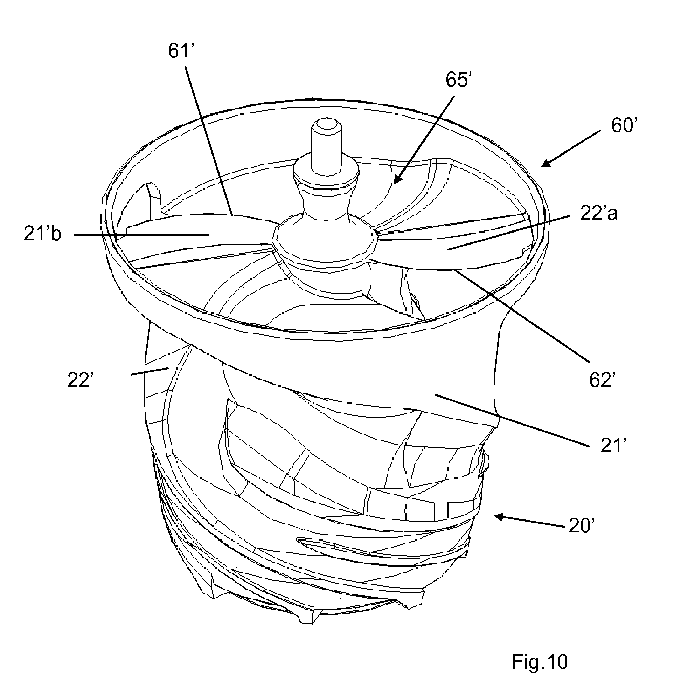

A titre de variante, la vis de pressage 20 et le disque de découpe 60 indépendant peuvent être remplacés par une vis de pressage 20' solidaire du disque de découpe 60', tel que représenté sur la figure 10. La vis de pressage 20' comporte avantageusement au moins deux filets principaux 21', 22'. La vis de pressage 20' comporte au moins une extrémité 21'b, 22'a de filet principal 21', 22' en regard avec la sortie d'alimentation 57 ; 157 ; 257. Les moyens de découpe rotatifs 65' comportent au moins un couteau agencé en extrémité 21'b, 22'a de filet principal 21', 22'. L'appareil comporte ainsi des moyens de découpe rotatifs 65' agencés entre la sortie d'alimentation 57 ; 157 ; 257 et la vis de pressage 20', appartenant au disque de découpe 60'. L'enceinte de travail 40 peut ainsi contenir la vis de pressage 20' avec au moins un filet principal 21', 22', alimentée par la goulotte 55; 155; 255. Les moyens de découpe rotatifs 65' sont ainsi entraînés en rotation par l'axe 15 avec la vis de pressage 20'. Les moyens de découpe rotatifs 65' peuvent comporter au moins deux couteaux 61', 62' agencés de part et d'autre de l'axe 15 de rotation pour effectuer une coupe des aliments insérés dans la goulotte 55 ; 155 ; 255.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, les moyens déflecteurs pourraient être des ailes intégrées à la paroi de la goulotte.

## Revendications

1. Appareil d'extraction de jus alimentaire comportant une enceinte de travail (40) avec une goulotte (55 ; 155 ; 255) d'alimentation définissant une hauteur entre une entrée d'alimentation (56 ; 156 ; 256) et une sortie d'alimentation (57 ; 157 ; 257) vers l'enceinte de travail (40), la goulotte (55 ; 155 ; 255) étant divisée en deux canaux (55a, 55b ; 158 ; 258) par une paroi (52 ; 152 ; 252) présentant une arête tranchante (51 ; 151 ; 251) du côté de l'entrée d'alimentation (56 ; 156 ; 256), l'enceinte de travail (40) contenant une vis de pressage (20 ; 20') avec au moins un filet principal (21, 22 ; 21', 22'), alimentée par la goulotte (55 ; 155 ; 255), **caractérisé en ce que** la paroi (52 ; 152 ; 252) divise la goulotte (55 ; 155 ; 255) sur au moins les trois-quarts de sa hauteur et **en ce que** l'appareil comporte des moyens de découpe rotatifs (65 ; 65') agencés entre la sortie d'alimentation (57 ; 157 ; 257) et la vis de pressage (20 ; 20').

2. Appareil selon la revendication 1, **caractérisé en ce que** la paroi (52 ; 152 ; 252) divise la goulotte (55 ; 155 ; 255) sur au moins 90% de sa hauteur.

3. Appareil selon l'une des revendications 1 ou 2, **caractérisé en ce que** les canaux (55a, 55b ; 158 ; 258) sont agencés de part et d'autre d'un axe (15) de rotation de la vis de pressage (20 ; 20'), et **en ce que** les moyens de découpe rotatifs (65 ; 65') sont entraînés en rotation par l'axe (15) avec la vis de pressage (20 ; 20') et comportent au moins un couteau (61, 62 ; 61', 62') pour effectuer une coupe des aliments insérés dans la goulotte (55 ; 155 ; 255).

4. Appareil selon la revendication 3, **caractérisé en ce que** la vis de pressage (20 ; 20') comporte au moins deux filets principaux (21, 22 ; 21', 22'), et **en ce que** les moyens de découpe rotatifs (65 ; 65') comportent au moins deux couteaux (61, 62 ; 61', 62') agencés de part et d'autre de l'axe (15) de rotation pour effectuer une coupe des aliments insérés dans la goulotte (55 ; 155 ; 255).

5. Appareil selon la revendication 4, **caractérisé en ce que** les couteaux (61, 62; 61', 62') et les canaux (55a, 55b) sont agencés symétriquement par rapport à l'axe (15) de rotation, de sorte que la coupe des aliments dans chaque canal (55a, 55b) est simultanée.

6. Appareil selon l'une des revendications 3 à 5, **caractérisé en ce que** la goulotte (55 ; 155 ; 255) comporte des moyens déflecteurs agencés pour écarter des aliments introduits dans les canaux (55a, 55b ; 158 ; 258) de l'axe (15) de rotation et les diriger directement vers les moyens de découpe rotatifs (65 ; 65').

7. Appareil selon la revendication 6, **caractérisé en ce que** les moyens déflecteurs sont un évasement (53 ; 153 ; 253) de la ou des paroi(s) (52 ; 152 ; 252).

8. Appareil selon l'une des revendications 1 à 7, **caractérisé en ce que** la vis de pressage (20; 20') comporte au moins une extrémité (21 b, 22a ; 21'b, 22'a) de filet principal (21, 22 ; 21', 22') en regard avec la sortie d'alimentation (57 ; 157 ; 257), et **en ce que** les moyens de découpe rotatifs (65; 65') comportent au moins un couteau (61, 62 ; 61', 62') agencé en extrémité (21 b, 22a ; 21'b, 22'a) de filet principal (21, 22 ; 21', 22').

9. Appareil selon l'une des revendications 1 à 7, **caractérisé en ce que** les moyens de découpe rotatifs (65 ; 65') appartiennent à un disque de découpe (60 ; 60') agencé entre la sortie d'alimentation (57 ; 157 ; 257) et la vis de pressage (20 ; 20').

10. Appareil selon la revendication 9, **caractérisé en ce que** la vis de pressage (20 ; 20') est entraînée en rotation par le disque de découpe (60 ; 60').

11. Appareil selon l'une des revendications 1 à 10, **caractérisé en ce que** l'enceinte de travail (40) comporte des moyens de guidage des moyens de découpe rotatifs (65 ; 65') et/ou de la vis de pressage (20 ; 20').

12. Appareil selon la revendication 11, **caractérisé en ce que** les moyens de guidage comprennent un moyeu (54 ; 154 ; 254) noyé dans la ou les paroi(s) (52 ; 152 ; 252).

13. Appareil selon l'une des revendications 1 à 12, **caractérisé en ce que** l'arête tranchante (51 ; 151 ; 251) est réalisée dans la même matière que la goulotte (55 ; 155 ; 255).

14. Appareil selon l'une des revendications 1 à 12, **caractérisé en ce que** l'arête tranchante (51 ; 151 ; 251) est une pièce rapportée sur la goulotte (55 ; 155 ; 255).

15. Appareil selon l'une des revendications 1 à 14, **caractérisé en ce qu'**il comporte un poussoir (70) agencé pour pousser les aliments tout le long de la goulotte (55 ; 155 ; 255).

## Patentansprüche

1. Gerät zur Extraktion von Lebensmittelsaft bestehend aus einem Arbeitsbehälter (40) mit Befüllrutsche (55; 155; 255), die eine Höhe zwischen einem Befülleingang (56; 156; 256) und einem Befüllausgang (57; 157; 257) zum Arbeitsbehälter (40) beschreibt, wobei die Rutsche (55; 155; 255) durch eine Wand (52; 152; 252) in zwei Kanäle (55a, 55b; 158; 258) geteilt ist und eine Schneidkante (51; 151; 251) auf der Seite des Befülleingangs (56; 156; 256) aufweist, und wobei der Arbeitsbehälter (40) eine Pressschnecke (20; 20') mit mindestens einem Hauptnetz (21, 22; 21', 22') aufweist, die über die Befüllrutsche versorgt wird (55; 155; 255), **dadurch gekennzeichnet, dass** die Wand (52; 152; 252) die Rutsche (55; 155; 255) auf mindestens drei Vierteln ihrer Höhe trennt und dass das Gerät mit rotierenden Schneidwerkzeugen (65; 65') ausgestattet ist, die zwischen dem Befüllausgang (57; 157; 257) und der Pressschnecke (20; 20') angeordnet sind.

2. Gerät nach Anspruch 1, **dadurch gekennzeichnet, dass** die Wand (52; 152; 252) die Rutsche (55; 155; 255) auf mindestens 90 % ihrer Höhe trennt.

3. Gerät nach einem der Ansprüche 1 oder 2, **dadurch gekennzeichnet, dass** die Kanäle (55a, 55b; 158; 258) zu beiden Seiten einer Rotationsachse (15) der Pressschnecke (20; 20') angeordnet sind und die rotierenden Schneidwerkzeuge (65; 65') von der Achse (15) mit der Pressschnecke (20; 20') in eine Drehbewegung versetzt werden und mindestens ein Messer (61, 62; 61', 62') aufweisen, um die in die Rutsche (55; 155; 255) eingeführten Lebensmittel zu zerschneiden.

4. Gerät nach Anspruch 3, **dadurch gekennzeichnet, dass** die Pressschnecke (20; 20') mit mindestens zwei Hauptnetzen (21, 22; 21', 22') ausgestattet ist und die rotierenden Schneidwerkzeuge (65; 65') mindestens zwei Messer (61, 62; 61', 62') aufweisen, die zu beiden Seiten der Rotationsachse (15) angeordnet sind, um die in die Rutsche (55; 155; 255) eingeführten Lebensmittel zu zerschneiden.

5. Gerät nach Anspruch 4, **dadurch gekennzeichnet, dass** die Messer (61, 62; 61', 62') und Kanäle (55a, 55b) zur Rotationsachse (15) symmetrisch angeordnet sind, so dass der Schneidvorgang in beiden Kanälen (55a, 55b) gleichzeitig stattfindet.

6. Gerät nach einem der Ansprüche 3 bis 5, **dadurch gekennzeichnet, dass** die Rutsche (55; 155; 255) Ablenkvorrichtungen aufweist, die so angeordnet sind, dass die den Kanälen (55a, 55b; 158; 258) zugeführten Lebensmittel von der Rotationsachse (15) ferngehalten und direkt zu den rotierenden Schneidwerkzeugen (65; 65') gelenkt werden.

7. Gerät nach Anspruch 6, **dadurch gekennzeichnet, dass** die Ablenkvorrichtungen als Wölbung (53; 153; 253) der Wand/Wände (52; 152; 252) ausgeführt sind.

8. Gerät nach einem der Ansprüche 1 bis 7, **dadurch gekennzeichnet, dass** die Pressschnecke (20; 20') mindestens ein Ende (21 b, 22a ; 21'b, 22'a) des Hauptnetzes (21, 22 ; 21', 22') aufweist, das sich dem Befüllausgang (57; 157; 257) gegenüber befindet, und dass die rotierenden Schneidwerkzeuge (65; 65') mindestens ein Messer (61, 62; 61', 62') aufweisen, das am Ende (21 b, 22a ; 21'b, 22'a) des Hauptnetzes (21, 22; 21', 22') angeordnet ist.

9. Gerät nach einem der Ansprüche 1 bis 7, **dadurch gekennzeichnet, dass** die rotierenden Schneidwerkzeuge (65; 65') Teil einer Schneidscheibe (60; 60') sind, die zwischen dem Befüllausgang (57; 157; 257) und der Pressschnecke (20; 20') angeordnet ist.

10. Gerät nach Anspruch 9, **dadurch gekennzeichnet, dass** die Pressschnecke (20; 20') von der Schneidscheibe (60; 60') in eine Drehbewegung versetzt wird.

11. Gerät nach einem der Ansprüche 1 bis 10, **dadurch gekennzeichnet, dass** der Arbeitsbehälter (40) Führungselemente der rotierenden Schneidwerkzeuge (65; 65') und/oder der Pressschnecke (20; 20') aufweist.

12. Gerät nach Anspruch 11, **dadurch gekennzeichnet, dass** die Führungselemente eine in die Wand/Wände (52; 152; 252) eingelassene Nabe (54; 154; 254) aufweisen.

13. Gerät nach einem der Ansprüche 1 bis 12, **dadurch gekennzeichnet, dass** die Schneidkante (51; 151; 251) in derselben Art wie die Rutsche (55; 155; 255) ausgeführt ist.

14. Gerät nach einem der Ansprüche 1 bis 12, **dadurch gekennzeichnet, dass** die Schneidkante (51; 151; 251) ein mit der Rutsche (55; 155; 255) verbundenes Teil ist.

15. Gerät nach einem der Ansprüche 1 bis 14, **dadurch gekennzeichnet, dass** es einen Drücker (70) aufweist, der geeignet ist, die Lebensmittel durch die gesamte Rutsche (55; 155; 255) zu schieben.

## Claims

1. Device for the extraction of nutritional juice consisting of a work chamber (40) with a supply chute (55; 155; 255) determining a height between a supply inlet (56; 156; 256) and a supply outlet (57; 157; 257) towards the work chamber (40), the chute (55; 155; 255) being divided into two channels (55a, 55b; 158; 258) by a wall (52; 152; 252) which has a sharp edge (51; 151; 251) on the side of the supply inlet (56; 156; 256), the work chamber (40) containing an auger (20; 20') with at least one main net (21, 22; 21', 22'), supplied by the chute (55; 155; 255), **characterised in that** the wall (52; 152; 252) divides the chute (55; 155; 255) by at least three quarters of its height and **in that** the device includes means of rotary cutting (65; 65') arranged between the supply outlet (57; 157; 257) and the auger (20; 20').

2. Device according to claim 1, **characterised in that** the wall (52; 152; 252) divides the chute (55; 155; 255) by at least 90% of its height.

3. Device according to one of claims 1 or 2, **characterised in that** the channels (55a, 55b; 158; 258) are arranged on both sides of an axis (15) of rotation of the auger (20; 20'), and **in that** the means of rotary cutting (65; 65') are rotated by the axis (15) with the auger (20; 20') and have at least one cutter (61, 62; 61', 62') to cut the food inserted into the chute (55; 155; 255).

4. Device according to claim 3, **characterised in that** the auger (20; 20') includes at least two main nets (21, 22; 21', 22'), and **in that** the means of rotary cutting (65; 65') have at least two cutters (61, 62; 61', 62') arranged on both sides of the axis (15) of rotation to cut the food inserted into the chute (55; 155; 255).

5. Device according to claim 4, **characterised in that** the cutters (61, 62; 61', 62') and the channels (55a, 55b) are arranged symmetrically in relation to the axis (15) of rotation, so that the cutting of food in each channel (55a, 55b) is simultaneous.

6. Device according to one of claims 3 to 5, **characterised in that** the chute (55; 155; 255) includes deflective means arranged to remove food introduced into the channels (55a, 55b; 158; 258) of axis (15) of rotation and to steer it directly towards the means of rotary cutting (65; 65').

7. Device according to claim 6, **characterised in that** the deflective means are a flare (53; 153; 253) of the wall(s) (52; 152; 252).

8. Device according to one of claims 1 to 7, **characterised in that** the auger (20; 20') includes at least one extremity (21 b, 22a; 21'b, 22'a) of the main net (21, 22; 21', 22') with regard to the supply outlet (57; 157; 257), and **in that** the means of rotary cutting (65; 65') include at least one cutter (61, 62; 61', 62') arranged at the extremity (21 b, 22a; 21'b, 22'a) of the main net (21, 22; 21', 22').

9. Device according to one of the claims 1 to 7, **characterised in that** the means of rotary cutting (65; 65') belong to a cutting disk (60; 60') arranged between the supply outlet (57; 157; 257) and the auger (20; 20').

10. Device according to claim 9, **characterised in that** the auger (20; 20') is rotated by the cutting disk (60; 60').

11. Device according to one of claims 1 to 10, **characterised in that** the work chamber (40) includes means of guiding the means of rotary cutting (65; 65') and/or the auger (20; 20').

12. Device according to claim 11, **characterised in that** the means of guiding include a hub (54; 154; 254) embedded in the wall(s) (52; 152; 252).

13. Device according to one of claims 1 to 12, **characterised in that** the sharp edge (51; 151; 251) is made from the same material as the chute (55; 155; 255).

14. Device according to one of claims 1 to 12, **characterised in that** the sharp edge (51; 151; 251) is a part attached to the chute (55; 155; 255).

15. Device according to one of claims 1 to 14, **characterised in that** it includes a button (70) arranged to push the food all along the chute (55; 155; 255).
